# EUROPEAN PATENT APPLICATION

(11) **EP 4 286 254 A1**
(43) Date of publication of application: **06.12.2023**
(21) Application number: 23165403.9
(22) Date of filing: 30.03.2023
(51) Int. Cl.: B62D 15/02

(54) **PARKING ASSISTANCE APPARATUS**

(30) Priority: 31.05.2022 JP 2022088885
(71) Applicant: TOYOTA JIDOSHA KABUSHIKI KAISHA, Aichi-Ken 471-8571 (JP)
(72) Inventor: MARUKI, Daiki, TOYOTA-SHI, AICHI-KEN, 471-8571 (JP); HIEI, Yu, TOYOTA-SHI, AICHI-KEN, 471-8571 (JP); MINASE, Yuki, TOYOTA-SHI, AICHI-KEN, 471-8571 (JP); KITAURA, Shinji, TOKYO, 103-0022 (JP)
(74) Representative: Cabinet Beau de Loménie

(57) **Abstract**

A parking assistance apparatus (10) sets a reference moving route, based on route information when a feature point corresponding to a registered start feature point is detected, automatically parking an own vehicle (100) at a parking space (200) is not requested, and a driver of the own vehicle (100) starts manually parking the own vehicle (100) at the parking space (200). After the driver starts manually parking the own vehicle (100) at the parking space (200), the parking assistance apparatus (10) executes an automatic parking control when automatically parking the own vehicle (100) at the parking space (200) is requested, and a positional relationship between the own vehicle (100) and the reference moving route satisfies a predetermined condition.

## Description

### BACKGROUND

### Field

The invention relates to a parking assistance apparatus.

### Description of the related art

There is known a parking assistance apparatus which executes an automatic parking control for automatically parking a vehicle. As this type of the parking assistance apparatus, there is also known a parking assistance apparatus which executes an automatic parking control to (i) acquire and memorize information on a parking space as registration information and register the parking space as a registered parking space when a driver of the vehicle manually parks the vehicle at the parking space by his/her driving operation, and thereafter (ii) automatically park the vehicle at the registered parking space by using the information on the memorized parking space (for example, see JP 2021-62717 A).

The known parking assistance apparatus is configured to execute the automatic parking control only when the vehicle stops at the same position as the position where the information on the parking space starts to be acquired. However, even when the vehicle stops at a different position from the position where the information on the parking space starts to be acquired, the driver may desire automatically parking the vehicle at the registered parking space by the automatic parking control.

### SUMMARY

An object of the invention is to provide a parking assistance apparatus which automatically parking the vehicle at the registered parking space by the automatic parking control when the vehicle stops at a different position from the position where the information on the parking space starts to be acquired.

According to the invention, a parking assistance apparatus comprises an electronic control unit. The electronic control unit is configured to execute an information memorization control to detect at least one feature point as a start feature point from a taken image and memorize the detected start feature point as a registered start feature point when an own vehicle stops near a parking space, and memorize as route information, information on a moving route of the own vehicle between a point of time when the start feature point is detected and a point of time when a driver of the own vehicle completes manually parking the own vehicle at the parking space. Manually parking the own vehicle corresponds to parking the own vehicle by a driving operation carried out by the driver.

According to the invention, when (i) the feature point corresponding to the registered start feature point is detected, and (ii) automatically parking the own vehicle at the parking space is requested, the electronic control unit is configured to execute an automatic parking control to set a target moving route, based on the route information, move the own vehicle along the target moving route, and park the own vehicle at the parking space. Further, when (i) the feature point corresponding to the registered start feature point is detected, (ii) automatically parking the own vehicle at the parking space is not requested, and (iii) the driver starts manually parking the own vehicle at the parking space, the electronic control unit is configured to set a reference moving route, based on the route information. Furthermore, after the driver starts manually parking the own vehicle at the parking space, the electronic control unit is configured to execute the automatic parking control when (i) automatically parking the own vehicle at the parking space is requested, and (ii) a positional relationship between the own vehicle and the reference moving route satisfies a predetermined condition.

With the parking assistance apparatus according to the invention, the own vehicle can be automatically parked at the parking space by the automatic parking control even when automatically parking the own vehicle at the parking space is requested while the driver manually parks the own vehicle at the parking space.

According to an aspect of the invention, the predetermined condition may be a condition that the own vehicle exists at a position within a predetermined distance range from the reference moving route.

With the parking assistance apparatus according to this aspect of the invention, the own vehicle can be automatically parked at the parking space by the automatic parking control when the own vehicle is within the predetermined distance range from the reference moving route even when automatically parking the own vehicle at the parking space is requested while the driver manually parks the own vehicle at the parking space.

According to another aspect of the invention, the route information may include a change of a steering amount of the own vehicle associated with a moving distance of the own vehicle between the point of time when the start feature point is detected and the point of time when the driver completes manually parking the own vehicle at the parking space.

With the parking assistance apparatus according to this aspect of the invention, the route information does not need to be acquired from the taken images. Thus, calculation load of the electronic control unit can be reduced.

According to further another aspect of the invention, the electronic control unit may be is configured to, while the electronic control unit executes the information memorization control, detect at least one feature point as a middle point feature point from the taken image between the point of time when the start feature point is detected and the point of time when the driver completes manually parking the own vehicle at the parking space, memorize the detected at least one middle point feature point as a registered middle point feature point, memorize as the route information, first information representing the moving route of the own vehicle between the point of time when the start feature point is detected and a point of time when the middle point feature point memorized as the registered middle point feature point is detected, memorizes as the route information, second information representing the moving route of the own vehicle after the middle point feature point memorized as the registered middle point feature point is detected, set the reference moving route, based on the first information when the feature point corresponding to the registered start feature point is detected, and set the reference moving route, based on the second information when the feature point corresponding to the registered middle point feature point is detected.

With the parking assistance apparatus according to this aspect of the invention, the first information shows a part of the moving route of the own vehicle between the point of time when the start feature point is detected and the point of time when the driver completes manually parking the own vehicle at the parking space. Thus, the first information includes a reduced amount of information. Similarly, the second information shows a part of the moving route of the own vehicle between the point of time when the start feature point is detected and the point of time when the driver completes manually parking the own vehicle at the parking space. Thus, the second information includes a reduced amount of information. Therefore, the calculation load of the electronic control unit for setting the reference moving route, etc. can be reduced.

Elements of the invention are not limited to elements of embodiments and modified examples of the invention described with reference to the drawings. The other objects, features and accompanied advantages of the invention can be easily understood from the embodiments and the modified examples of the invention. In addition, the invention can be applied to a vehicle which can be moved by one or both of a manual driving operation carried out by a driver of the vehicle and an automatic driving control executed by a computer.

### BRIEF DESCRIPTION OF THE DRAWINGS

FIG. 1 is a view which shows a parking assistance apparatus according to an embodiment of the invention and a vehicle or an own vehicle installed with the parking assistance apparatus.
FIG. 2A is a view which shows a scene that the own vehicle stops near a parking space.
FIG. 2B is a view which shows a scene that the own vehicle is moved toward the parking space by a driving operation carried by a driver.
FIG. 2C is a view which shows a scene that the driver completes manually parking the own vehicle at the parking space by the driving operation carried out by the driver.
FIG. 3A is a view which shows a scene that the own vehicle stops within a start point area near a registered parking space.
FIG. 3B is a view which shows a target moving route used by an automatic parking control.
FIG. 3C is a view which shows a scene that the own vehicle is moved to the registered parking space by the automatic parking control.
FIG. 3D is a view which shows a scene that automatically parking the own vehicle at the registered parking space by the automatic parking control, is completed.
FIG. 4A is a view which shows a scene that the own vehicle stops within the start point area near the registered parking space.
FIG. 4B is a view which shows a reference moving route used to determine whether to execute the automatic parking control.
FIG. 4C is a view which shows a scene that the own vehicle is moved to the registered parking space by a driving operation carried out by the driver.
FIG. 5A is a view which shows the target moving route used by the automatic parking control.
FIG. 5B is a view which shows a scene that the own vehicle is moved to the registered parking space by the automatic parking control.
FIG. 5C is a view which shows a scene that automatically parking the own vehicle at the registered parking space by the automatic parking control, is completed.
FIG. 6 is a view which shows a routine executed by the parking assistance apparatus according to the embodiment of the invention.
FIG. 7 is a view which shows a routine executed by the parking assistance apparatus according to the embodiment of the invention.
FIG. 8 is a view which shows a routine executed by the parking assistance apparatus according to the embodiment of the invention.
FIG. 9 is a view which shows a routine executed by the parking assistance apparatus according to the embodiment of the invention.
FIG. 10A is a view which shows a scene that the own vehicle stops near the parking space.
FIG. 10B is a view which shows a scene that the own vehicle is moved to the parking space by the driving operation carried out by the driver.
FIG. 10C is a view which shows a scene that the driver completes manually parking the own vehicle at the parking space by the driving operation carried out by the driver.
FIG. 11 is a view which shows a routine executed by the parking assistance apparatus according to the embodiment of the invention.
FIG. 12 is a view which shows a routine executed by the parking assistance apparatus according to the embodiment of the invention.
FIG. 13A is a view which shows a scene that the own vehicle stops near the registered parking space, but outside of the start point area.
FIG. 13B is a view which shows a scene that the own vehicle is moved to the registered parking space by the driving operation carried out by the driver.
FIG. 13C is a view which shows the target moving route used by the automatic parking control.
FIG. 13D is a view which shows a scene that the own vehicle is parked at the registered parking space by the automatic parking control.
FIG. 14 is a view which shows a routine executed by the parking assistance apparatus according to the embodiment of the invention.

### DESCRIPTION OF THE EMBODIMENTS

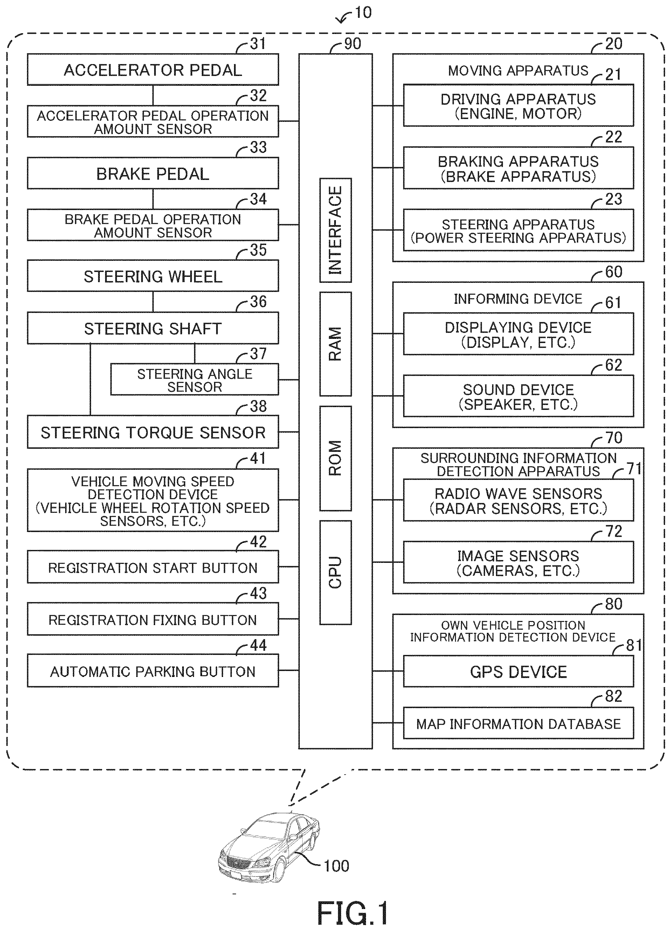

Below, a parking assistance apparatus according to an embodiment of the invention will be described with reference to the drawings. As shown in FIG. 1, the parking assistance apparatus 10 according to the embodiment of the invention is installed on an own vehicle 100.

### <ECU>

The parking assistance apparatus 10 includes an ECU 90 as a control device. ECU stands for electronic control unit. The ECU 90 includes a micro-computer as a main component. The micro-computer includes a CPU, a ROM, a RAM, a non-volatile memory, and an interface. The CPU is configured or programmed to realize various functions by executing instructions, or programs, or routines stored in the ROM.

### <Moving Apparatus>

Further, a moving apparatus 20 is installed on the own vehicle 100. The moving apparatus 20 includes a driving apparatus 21, a braking apparatus 22, and a steering apparatus 23.

### <Driving Apparatus>

The driving apparatus 21 is an apparatus which outputs a driving torque or a driving force to be applied to the own vehicle 100 to move the same. The driving apparatus 21 may include an internal combustion engine and an electric motor. The driving apparatus 21 is electrically connected to the ECU 90. The ECU 90 controls the driving torque output from the driving apparatus 21 by controlling operations of the driving apparatus 21.

### <Braking Apparatus>

The braking apparatus 22 is an apparatus which outputs a braking torque or a braking force to be applied to the own vehicle 100 to brake the same. The braking apparatus 22 may include a brake apparatus. The braking apparatus 22 is electrically connected to the ECU 90. The ECU 90 controls the braking torque output from the braking apparatus 22 by controlling operations of the braking apparatus 22.

### <Steering Apparatus>

The steering apparatus 23 is an apparatus which outputs a steering torque or a steering force to be applied to the own vehicle 100 to steer the same. The steering apparatus 23 may include a power steering apparatus. The steering apparatus 23 is electrically connected to the ECU 90. The ECU 90 controls the steering torque output from the steering apparatus 23 by controlling operations of the steering apparatus 23.

### <Sensors, Etc.>

Further, an accelerator pedal 31, an accelerator pedal operation amount sensor 32, a brake pedal 33, a brake pedal operation amount sensor 34, a steering wheel 35, a steering shaft 36, a steering angle sensor 37, a steering torque sensor 38, a vehicle moving speed detection device 41, a registration start button 42, a registration fixing button 43, an automatic parking button 44, an information device (informing device) 60, a surrounding information detection apparatus 70, and an own vehicle position information detection device 80 are installed on the own vehicle 100.

### <Accelerator Pedal Operation Amount Sensor>

The accelerator pedal operation amount sensor 32 is a sensor which detects an operation amount of the accelerator pedal 31. The accelerator pedal operation amount sensor 32 is electrically connected to the ECU 90. The accelerator pedal operation amount sensor 32 sends information on the detected operation amount of the accelerator pedal 31 to the ECU 90. The ECU 90 acquires the operation amount of the accelerator pedal 31 as an accelerator pedal operation amount AP, based on the information sent from the accelerator pedal operation amount sensor 32. The ECU 90 acquires a requested driving torque or a requested driving force, based on the acquired accelerator pedal operation amount AP and a moving speed of the own vehicle 100, and controls the operations of the driving apparatus 21 to apply the driving torque corresponding to the requested driving torque from the driving apparatus 21 to the own vehicle 100, in particular, driven wheels of the own vehicle 100.

### <Brake Pedal Operation Amount Sensor>

The brake pedal operation amount sensor 34 is a sensor which detects an operation amount of the brake pedal 33. The brake pedal operation amount sensor 34 is electrically connected to the ECU 90. The brake pedal operation amount sensor 34 sends information on the detected operation amount of the brake pedal 33 to the ECU 90. The ECU 90 acquires the operation amount of the brake pedal 33 as a brake pedal operation amount BP, based on the information sent from the brake pedal operation amount sensor 34. The ECU 90 acquires a requested braking torque or a requested braking force, based on the acquired brake pedal operation amount BP, and controls the operations of the braking apparatus 22 to apply the braking torque corresponding to the requested braking torque from the braking apparatus 22 to the own vehicle 100, in particular, wheels of the own vehicle 100.

### <Steering Angle Sensor>

The steering angle sensor 37 is a sensor which detects a rotation angle of the steering shaft 36 with respect to its neutral position. The steering angle sensor 37 is electrically connected to the ECU 90. The steering angle sensor 37 sends information on the detected rotation angle of the steering shaft 36 to the ECU 90. The ECU 90 acquires the rotation angle of the steering shaft 36 as a steering angle θ, based on the information sent from the steering angle sensor 37.

### <Steering Torque Sensor>

The steering torque sensor 38 is a sensor which detects a torque input to the steering shaft 36 by the driver with the steering wheel 35. The steering torque sensor 38 is electrically connected to the ECU 90. The steering torque sensor 38 sends information on the detected torque to the ECU 90. The ECU 90 acquires the torque input to the steering shaft 36 by the driver with the steering wheel 35 as a driver input torque, based on the information sent from the steering torque sensor 38.

The ECU 90 acquires a requested steering torque, based on the acquired steering angle θ, the acquired driver input torque, and the moving speed of the own vehicle 100, and controls the operations of the steering apparatus 23 to apply the steering torque corresponding to the requested steering torque from the steering apparatus 23 to the own vehicle 100, in particular, steered-wheels of the own vehicle 100.

### <Vehicle Moving Speed Detection Device>

The vehicle moving speed detection device 41 is a device which detects the moving speed of the own vehicle 100. The vehicle moving speed detection device 41 may include vehicle wheel rotation speed sensors. The vehicle moving speed detection device 41 is electrically connected to the ECU 90. The vehicle moving speed detection device 41 sends information on the detected moving speed of the own vehicle 100 to the ECU 90. The ECU 90 acquires the moving speed of the own vehicle 100 as an own vehicle moving speed V, based on the information sent from the vehicle moving speed detection device 41.

### <Registration Start Button>

The registration start button 42 is a button which is operated by the driver to request an execution of an information registration control or an information memorization control described later in detail. The registration start button 42 is electrically connected to the ECU 90. When the registration start button 42 is operated, the ECU 90 determines that the execution of the information registration control described later in detail is requested.

It should be noted that when the displaying device 61 includes a touch operable display, the registration start button 42 may be realized by a display image displayed on the touch operable display.

### <Registration Fixing Button>

The registration fixing button 43 is a button which is operated by the driver to request a registration of various information acquired from the information registration control or the information memorization control described later in detail. The registration fixing button 43 is electrically connected to the ECU 90. When the registration fixing button 43 is operated, the ECU 90 determines that the registration of the various information acquired by the information registration control described later in detail is requested.

It should be noted that when the displaying device 61 includes the touch operable display, the registration fixing button 43 may be realized by a display image displayed on the touch operable display.

### <Automatic Parking Button>

The automatic parking button 44 is a button which is operated by the driver to request an execution of an automatic parking control described later in detail. The automatic parking button 44 is electrically connected to the ECU 90. When the automatic parking button 44 is operated, the ECU 90 determines that the execution of the automatic parking control is requested.

It should be noted that when the displaying device 61 includes the touch operable display, the automatic parking button 44 may be realized by a display image displayed on the touch operable display.

### information Device>

The information device 60 is a device which provides the driver with various information. In this embodiment, the information device 60 includes a displaying device 61 and a sound device 62. The displaying device 61 may be a display which displays various images. The sound device 62 may be a speaker which outputs various announcements.

### <Displaying Device>

The displaying device 61 is electrically connected to the ECU 90. The ECU 90 can display various images on the displaying device 61.

### <Sound Device>

The sound device 62 is electrically connected to the ECU 90. The ECU 90 can output various announcements from the displaying device 61.

### <Surrounding Information Detection Apparatus>

The surrounding information detection apparatus 70 is an apparatus which detects information around the own vehicle 100. In this embodiment, the surrounding information detection apparatus 70 includes radio wave sensors 71 and image sensors 72. The radio wave sensor 71 may be a radar sensor such as a millimeter wave radar. The image sensor 72 may be a camera. It should be noted that the surrounding information detection apparatus 70 may include sonic wave sensors such as ultrasonic sensors such as clearance sonars and/or optical sensors such as LiDARs.

### <Radio Wave Sensors>

The radio wave sensors 71 are electrically connected to the ECU 90. The radio wave sensor 71 transmits radio waves and receives the radio waves reflected by objects, i.e., reflected waves. The radio wave sensors 71 send information or detection results on the transmitted radio waves and the reflected waves, i.e., the radio waves reflected by the objects to the ECU 90. In other words, the radio wave sensors 71 detect objects around the own vehicle 100 and send information or detection results on the detected objects to the ECU 90. The ECU 90 acquires the information on the objects around the own vehicle 100 as surrounding detection information IS, based on the information or radio wave information sent from the radio wave sensors 71. In this regard, in this embodiment, the objects may include vehicles, motorcycles or motor bikes, bicycles, and persons.

### <Image Sensors>

The image sensors 72 are electrically connected to the ECU 90. The image sensor 72 takes images of views around the own vehicle 100 and sends information on the taken images or camera images to the ECU 90. The ECU 90 acquires the information on situations around the own vehicle 100 as the surrounding detection information IS, based on the information, or taken image information, or camera image information.

### <Own Vehicle Position Information Detection Device>

The own vehicle position information detection device 80 includes a GPS device 81 and a map information database 82.

### <GPS Device>

The GPS device 81 is a device which receives so-called GPS signals. The GPS device 81 is electrically connected to the ECU 90. The ECU 90 acquires the GPS signals through the GPS device 81. The ECU 90 acquires or determines a position of the own vehicle 100, based on the acquired GPS signals.

### <Map Information Database>

The map information database 82 is a database which stores map information. The map information database 82 is electrically connected to the ECU 90. The ECU 90 can realize where the own vehicle 100 is on a map indicated by the map information, based on the position of the own vehicle 100 determined, based on the GPS signals and the map information.

### <Summary of Operations of Parking Assistance Apparatus>

Next, a summary of operations of the parking assistance apparatus 10 will be described. The parking assistance apparatus 10 executes (i) an information registration control or an information memorization control and (ii) an automatic parking control. The information registration control or the information memorization control is a control to register or memorize information used to automatically park the own vehicle 100 at a parking space. The automatic parking control is a control to automatically park the own vehicle 100 at the parking space by using the information registered by the information registration control. Below, the information registration and the automatic parking control will be described.

### information Registration Control>

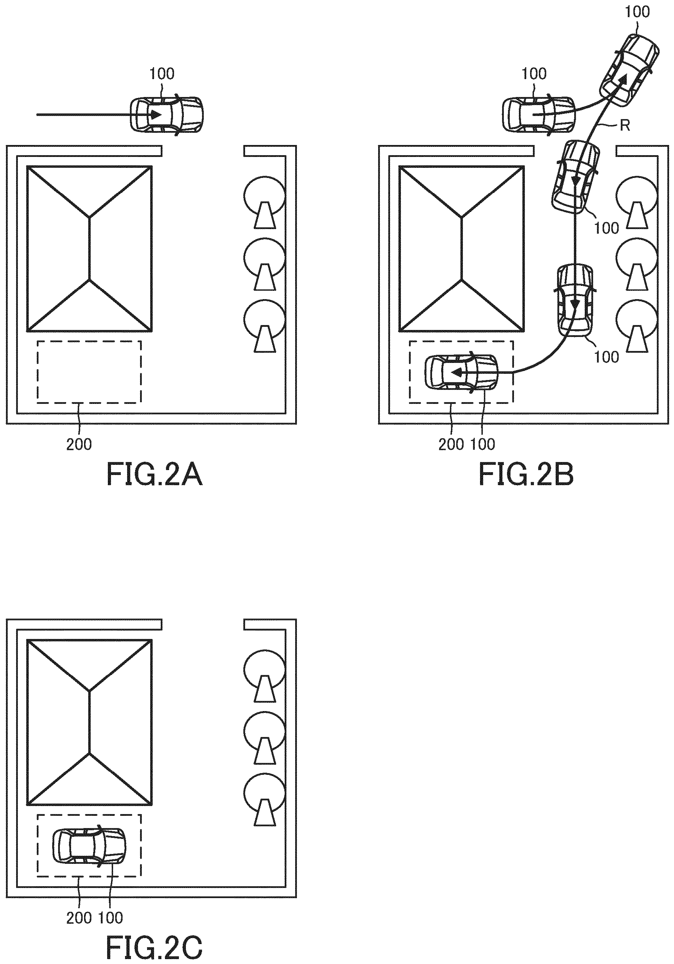

The information registration control will be described. For example, as shown in FIG. 2A, the parking assistance apparatus 10 starts to execute the information registration control when (i) the own vehicle 100 stops near the parking space 200, and (ii) a registration start condition becomes satisfied. In this embodiment, the registration start condition is a condition that the registration start button 42 is operated.

When the parking assistance apparatus 10 starts to execute the information registration control, the parking assistance apparatus 10 executes a start point information process of the information registration control. The start point information process is a process to (i) detect start point feature points, i.e., feature points of ground and/or objects such as walls, buildings, and trees around the own vehicle 100 from the camera images, (i) store the detected start point feature points as start point information, (iii) acquire a positional relationship between the detected start point feature points and the own vehicle 100 as a start point positional relationship, and (iv) store the acquired start point positional relationship, associated with the detected start point feature points as the start point information. It should be noted that the parking assistance apparatus 10 of this embodiment is configured to detect a plurality of the start point feature points by the start point information process, but may be configured to detect the one start point feature point by the start point information process. Further, in this embodiment, the parking assistance apparatus 10 stores various information in a memory device such as the non-volatile memory. Furthermore, in this embodiment, the parking assistance apparatus 10 registers or memorizes the stored various information as fixed information in the memory device such as the non-volatile memory as described later.

As shown in FIG. 2B, after the parking assistance apparatus 10 completes the start point information process, the parking assistance apparatus 10 executes a route information process of the information registration control with a predetermined time interval while the driver manually parks the own vehicle 100 at the parking space 200. Manual parking the own vehicle 100 corresponds to parking the own vehicle 100 by a driving operation carried out by the driver. Further, the route information process is a process to acquire a moving route R of the own vehicle 100 and store the acquired moving route R associated with the start point feature points as route information.

It should be noted that the moving route R of the own vehicle 100 can be represented by a change of a steering amount of the own vehicle 100 with respect to a moving distance of the own vehicle 100. Thus, in this embodiment, the route information process is a process to (i) acquire the steering amount of the own vehicle 100, (ii) acquire the moving distance of the own vehicle 100 (i.e., a distance which the own vehicle 100 moves) with the acquired steering amount, and (iii) store the acquired steering amount and the acquired moving distance associated with the start point feature points as the route information. Thus, after the parking assistance apparatus 10 completes the start point information process, the parking assistance apparatus 10 (i) acquires the steering amount of the own vehicle 100 with the predetermined time interval, (ii) acquires the moving distance of the own vehicle 100 (i.e., the distance which the own vehicle 100 moves) with the acquired steering amount for the predetermined time interval, and (iii) stores the acquired steering amount and the acquired moving distance as the route information. In this embodiment, the steering amount of the own vehicle 100 corresponds to a magnitude of the steering angle of the steered-wheels of the own vehicle 100.

Thereafter, when a registration termination condition becomes satisfied, the parking assistance apparatus 10 executes an end point information process of the information registration control. In this embodiment, as shown in FIG. 2C, the registration termination condition is a condition that (i) the driver completes manually parking the own vehicle 100 at the parking space 200, and (ii) the registration fixing button 43 is operated. Further, in this embodiment, when (i) the own vehicle moving speed V becomes zero, and (ii) a shift lever of the own vehicle 100 is set at a parking range, the parking assistance apparatus 10 determines that the driver completes manually parking the own vehicle 100 at the parking space 200. Furthermore, the end point information process is a process to (i) detect the feature points of the ground and/or the objects around the own vehicle 100 from the camera images as end point feature points, (ii) store the detected end point feature points as the end point information, (iii) acquire a positional relationship between the detected end point feature points and the own vehicle 100 as an end point positional relationship, and (iv) store the acquired end point positional relationship, associated with the detected end point feature points as the end point information. It should be noted that the parking assistance apparatus 10 of this embodiment is configured to acquire a plurality of the end point feature points by the end point information process, but may be configured to acquire the one end point feature point by the end point information process.

After the parking assistance apparatus 10 completes the end point information process, the parking assistance apparatus 10 executes a registration process of the information registration control.
The registration process is a process to (i) register as a registered parking space, the parking space 200 where the own vehicle 100 is parked this time by the driving operation carried out by the driver, and (ii) register or memorize as fixed information, the stored start point information, the stored route information, and the stored end point information, associated with the registered parking space.

When the parking assistance apparatus 10 completes the registration process, the parking assistance apparatus 10 terminates executing the information registration control.

In the description below, registered start point information is the start point information registered, associated with the registered parking space, registered start point feature points are the start point feature points memorized as the registered start point information, and a registered start point positional relationship is the start point positional relationship memorized as the registered start point information. Further, in the description below, registered route information is the route information registered, associated with the registered parking space. Furthermore, in the description below, registered end point information is the end point information registered, associated with the registered parking space, registered end point feature points are the end point feature points memorized as the registered end point information, and a registered end point positional relationship is the end point positional relationship memorized as the registered end point information.

### <Automatic Parking Control>

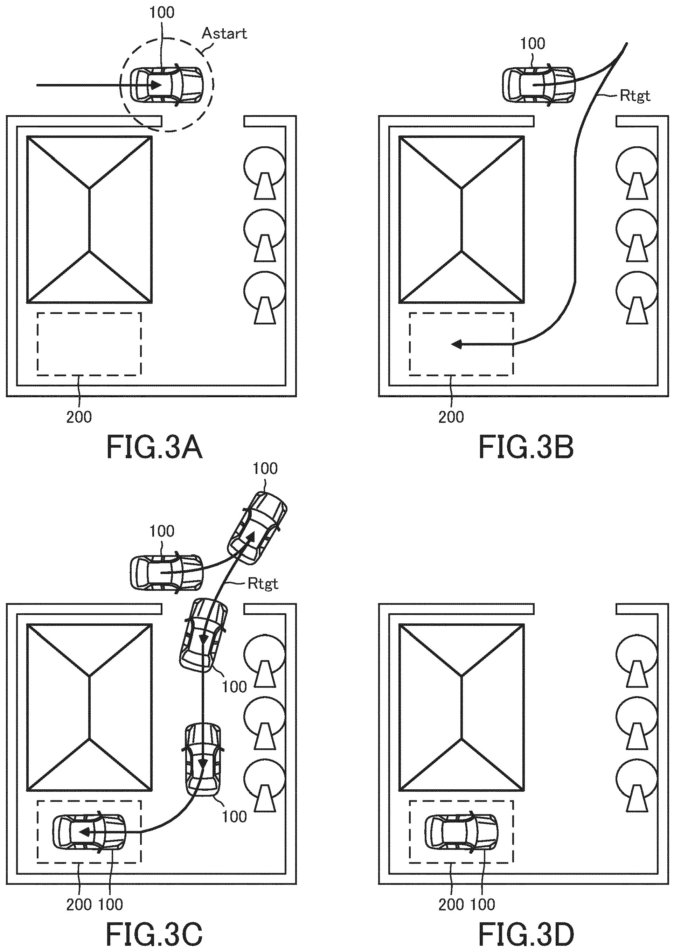

Next, the automatic parking control will be described. When (i) a start point condition becomes satisfied, and (ii) an automatic parking request condition becomes satisfied, the parking assistance apparatus 10 starts to execute the automatic parking control. The start point condition is a condition that the own vehicle 100 stops in a start point area Astart as shown in FIG. 3A. The automatic parking request condition is a condition that the automatic parking button 44 is operated. The start point area Astart is an area having (i) a circle shape having a radius of a certain distance and (ii) a center corresponding to the position of the own vehicle 100 when the registered start point feature points were detected.

It should be noted that the parking assistance apparatus 10 may be configured to display an automatic parking proposal image by the displaying device 61 when the start point condition becomes satisfied. The automatic parking proposal image is an image which displays that the own vehicle 100 can be automatically parked at the registered parking space. Alternatively, the parking assistance apparatus 10 may be configured to output an automatic parking proposal announcement from the sound device 62 when the start point condition becomes satisfied. The automatic parking proposal announcement is an announcement which announces that the own vehicle 100 can be automatically parked at the registered parking space. It should be noted that automatically parking the own vehicle at the registered parking space corresponds to parking the own vehicle 100 at the registered parking space by the automatic parking control.

Further, the parking assistance apparatus 10 may be configured to display the automatic parking button 44 by the displaying device 61 in addition to displaying the automatic parking proposal image and/or outputting the automatic parking proposal announcement.

Furthermore, a process to determine whether the own vehicle 100 stops in the start point area Astart may be based on (i) the camera images taken when the own vehicle 100 stops or (ii) the position of the own vehicle 100 determined, based on the GPS signal received when the own vehicle 100 stops.

In case that the process to determine whether the own vehicle 100 stops in the start point area Astart is based on the camera images, the process determines that the own vehicle 100 stops in the start point area Astart when (i) the feature points corresponding to the registered start point feature points are detected from the camera images taken when the own vehicle 100 stops, and (ii) the positional relationship between the detected feature points and the own vehicle 100 corresponds to the registered start point positional relationship to an extent.

Further, in case that the process to determine whether the own vehicle 100 stops in the start point area Astart is based on the position of the own vehicle 100 determined, based on the GPS signal received when the own vehicle 100 stops, the process determines that the own vehicle 100 stops in the start point area Astart when the position of the own vehicle 100 determined, based on the GPS signal received when the own vehicle 100 stops, corresponds to a registered start point to an extent. The registered start point is the position of the own vehicle 100 which is (i) determined, based on the GPS signal received when the registration start condition becomes satisfied and (ii) is registered as the start position, associated with the registered parking space.

When the parking assistance apparatus 10 starts to execute the automatic parking control, the parking assistance apparatus 10 acquires a positional relationship between tracking start point feature points and the own vehicle 100. The tracking start point feature points are the feature points detected from the camera images and corresponding to the registered start point feature points. Then, the parking assistance apparatus 10 compares the acquired positional relationship and the registered start point positional relationship. Then, the parking assistance apparatus 10 sets a target moving route Rtgt, based on (i) a comparing result and (ii) the registered route information as shown in FIG. 3B. The target moving route Rtgt is a route suitable for moving and parking the own vehicle 100 at the registered parking space.

As described above, the moving route R of the own vehicle 100 is represented by a change of the steering amount of the own vehicle 100 with respect to the moving distance of the own vehicle 100. Thus, in this embodiment, the target moving route Rtgt is also represented by a change of a target steering amount of the own vehicle 100 with respect to the moving distance of the own vehicle 100.

After the parking assistance apparatus 10 sets the target moving route Rtgt, the parking assistance apparatus 10 controls the operations of the moving apparatus 20 to move the own vehicle 100 along the target moving route Rtgt as shown in FIG. 3C. Thereafter, when automatically parking the own vehicle at the registered parking space, is completed as shown in FIG. 3D, the parking assistance apparatus 10 terminates executing the automatic parking control.

A process to determine whether automatically parking the own vehicle 100 at the registered parking space, is completed, may be based on the camera images. Alternatively, the process to determine whether automatically parking the own vehicle 100 at the registered parking space, may be based on the position of the own vehicle 100 determined, based on the GPS signal.

In case that the process to determine whether automatically parking the own vehicle 100 at the registered parking space, is completed, is based on the camera images, the process determines that automatically parking the own vehicle 100 at the registered parking space, is completed when (i) the feature points corresponding to the registered end point feature points are detected from the camera images taken when the own vehicle 100 stops, and (ii) a positional relationship between the detected feature points and the own vehicle 100 corresponds to the registered end point positional relationship to an extent.

In case that the process to determine whether automatically parking the own vehicle 100 at the registered parking space, is completed, is based on the position of the own vehicle 100 determined, based on the GPS, the process determines that automatically parking the own vehicle 100 at the registered parking space, is completed when the position of the own vehicle 100 determined, based on the GPS signal received when the own vehicle 100 stops, corresponds to a parking completed position to an extent. The parking completed position is the position of the own vehicle 100 which is (i) determined, based on the GPS received when the registration termination condition becomes satisfied during the information registration control and (ii) registered as the parking completed position, associated with the registered parking space.

Further, the parking assistance apparatus 10 may be configured to (i) display an automatic parking completed information image by the displaying device 61 when automatically parking the own vehicle 100 at the registered parking space, is completed, or (ii) output an automatic parking completed information announcement from the sound device 62 when automatically parking the own vehicle 100 at the registered parking space, is completed. The automatic parking completed information image is an image which displays that automatically parking the own vehicle 100 at the registered parking space, is completed. The automatic parking completed information announcement is an announcement which announces that automatically parking the own vehicle 100 at the registered parking space, is completed.

### <Tracking Control>

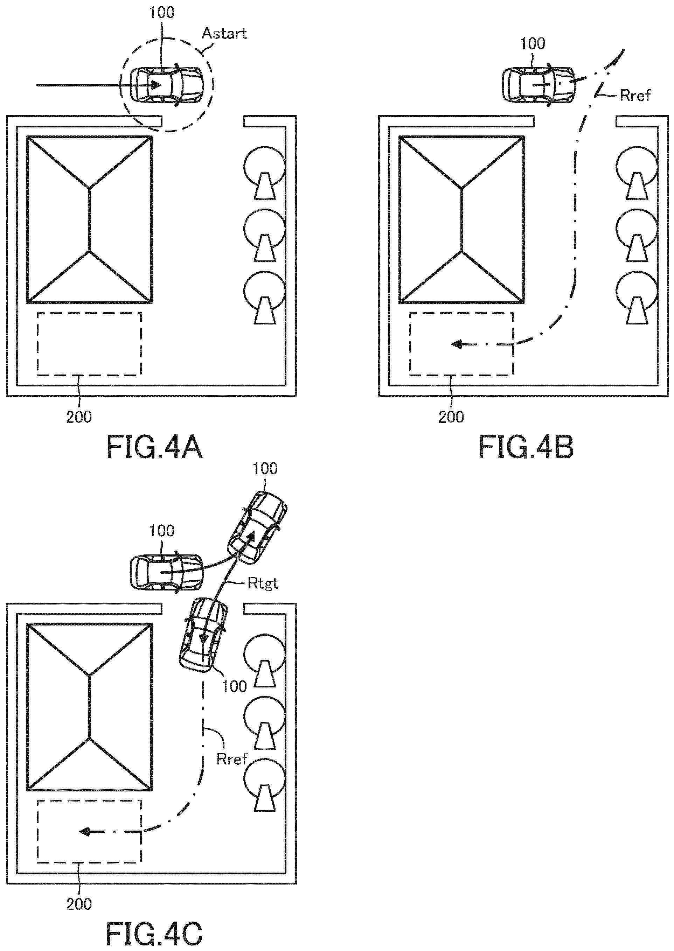

Although the own vehicle 100 stops in the start point area Astart as shown in FIG. 4A, the driver may start to move the own vehicle 100 to park the own vehicle 100 at the registered parking space by his/her driving operation without using the automatic parking control. After the driver starts moving the own vehicle 100, the driver may desire to use the automatic parking control to park the own vehicle 100 at the registered parking space. In this case, it is convenient for the driver to use the automatic parking control.

Accordingly, when the own vehicle 100 stops in the start point area Astart, but the automatic parking button 44 is not operated, and thus the automatic parking request condition does not become satisfied, the parking assistance apparatus 10 starts to execute a tracking control in order to determine whether the automatic parking control can be executed in response to the automatic parking button 44 being operated while the driver manually parks the own vehicle 100 at the registered parking space.

When (i) the parking assistance apparatus 10 executes the tracking control, and (ii) the own vehicle 100 stops in the start point area Astart, and thus the start point condition becomes satisfied, the parking assistance apparatus 10 executes a reference moving route setting process of the tracking control. The reference moving route setting process is a process to set a reference moving route Rref. As shown in FIG. 4B, the reference moving route Rref set by the reference moving route setting process is a route suitable for moving and parking the own vehicle 100 at the registered parking space. In particular, the reference moving route setting process is a process to (i) detect tracking start point feature points (i.e., the feature points corresponding to the registered start point feature points) from the camera images, (ii) acquire a positional relationship between the detected tracking start point feature points and the own vehicle 100, (iii) compare the acquired positional relationship and the registered start point positional relationship, and (iv) set as the reference moving route Rref, a route suitable for moving and parking the own vehicle 100 at the registered parking space, based on the comparing result and the registered route information.

It should be noted that the reference moving route Rref is the same as the target moving route Rtgt which is set when (i) the own vehicle 100 stops in the start point area Astart, (ii) the start point condition becomes satisfied, (iii) the automatic parking request condition becomes satisfied, and (iv) the automatic parking control starts to be executed. The reference moving route Rref is represented by the change of the steering amount of the own vehicle 100 with respect to the moving distance of the own vehicle 100.

While the driver manually parks the own vehicle 100 at the registered parking space as shown in FIG. 4C, the parking assistance apparatus 10 executes a moving information process of the tracking control with the predetermined time interval as far as the automatic parking button 44 is not operated. The moving information process is a process to (i) acquire the steering amount of the own vehicle 100 and the moving distance of the own vehicle 100 with the acquired steering amount and (ii) store the acquired steering amount and the acquired moving distance as the moving information, associated with the tracking start point feature points.

### <Automatic Parking Control>

When a predetermined condition, i.e., the automatic parking request condition becomes satisfied in response to the automatic parking button 44 being operated before the driver completes manually parking the own vehicle 100 at the registered parking space, the parking assistance apparatus 10 determines whether an own vehicle position condition is satisfied. The own vehicle position condition is a condition that the own vehicle 100 is in a predetermined distance area from the reference moving route Rref. In this embodiment, whether the own vehicle position condition is satisfied, is determined, based on the stored moving information (i.e., the change of the steering amount of the own vehicle 100 with respect to the moving distance of the own vehicle 100), associated with the tracking start point feature points. That is, the position of the own vehicle 100 with respect to the reference moving route Rref can be determined from the change of the steering amount of the own vehicle 100 with respect to the moving distance of the own vehicle 100 after the tracking start point feature points are detected. Therefore, the parking assistance apparatus 10 determines whether the own vehicle position condition is satisfied, that is, whether the own vehicle 100 is in the predetermined distance area from the reference moving route Rref, based on the change of the steering amount of the own vehicle 100 with respect to the moving distance of the own vehicle 100, stored in association with the tracking start point feature points.

When the own vehicle position condition is not satisfied, the parking assistance apparatus 10 does not execute the automatic parking control. On the other hand, when the own vehicle position condition is satisfied, the parking assistance apparatus 10 starts to execute the automatic parking control.

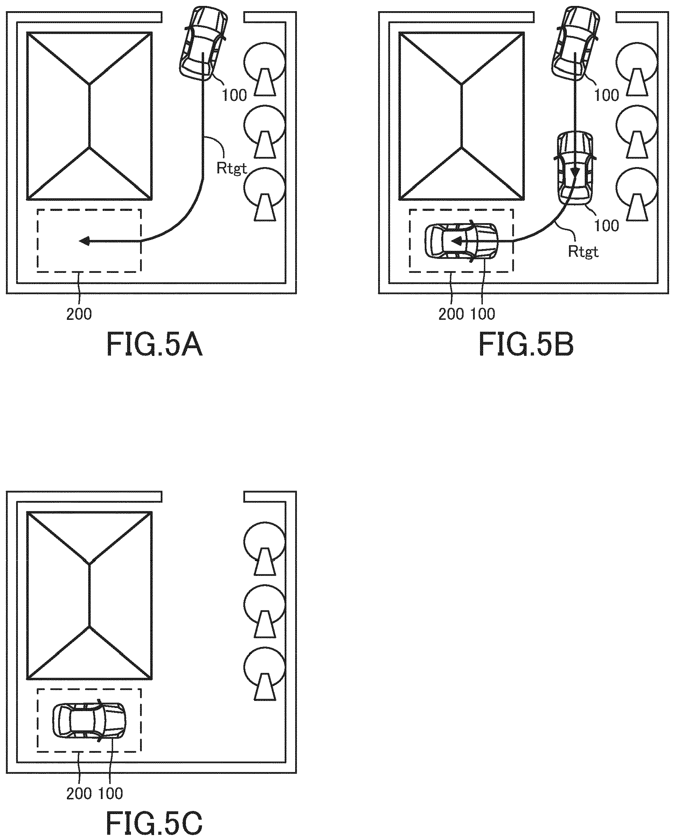

While the parking assistance apparatus 10 executes the automatic parking control, the parking assistance apparatus 10 sets the target moving route Rtgt. The target moving route Rtgt set at this time is a moving route suitable for automatically parking the own vehicle 100 at the registered parking space as shown in FIG. 5A. Then, the parking assistance apparatus 10 moves the own vehicle 100 along the target moving route Rtgt to park the own vehicle 100 at the registered parking space as shown in FIG. 5B.

It should be noted that the target moving route Rtgt (i.e., the moving route suitable for automatically parking the own vehicle 100 at the registered parking space) is set, based on the positional relationship between the own vehicle 100 and the reference moving route Rref when the automatic parking control starts to be executed.

It should be noted that the parking assistance apparatus 10 may be configured to display an automatic parking use proposal image by the displaying device 61 when (i) the start point condition becomes satisfied, and (ii) the automatic parking button 44 is not operated. In this case, the parking assistance apparatus 10 may be configured to continue to display the automatic parking use proposal image by the displaying device 61 as far as the automatic parking button 44 is not operated before the driver completes manually parking the own vehicle 100 at the registered parking space. The automatic parking use proposal image is an image which displays that automatically parking the own vehicle 100 at the registered parking space can be used. Alternatively, the parking assistance apparatus 10 may be configured to output an automatic parking use proposal announcement from the sound device 62 when (i) the start point condition becomes satisfied, and (ii) the automatic parking button 44 is not operated. In this case, the parking assistance apparatus 10 may be configured to continue to output the automatic parking use proposal announcement from the sound device 62 as far as the automatic parking button 44 is not operated before the driver completes manually parking the own vehicle 100 at the registered parking space. The automatic parking use proposal announcement is an announcement which announces that automatically parking the own vehicle 100 at the registered parking space can be used.

Further, the parking assistance apparatus 10 may be configured to continue to display the automatic parking button 44 by the displaying device 61 as far as the automatic parking button 44 is not operated until the driver completes manually parking the own vehicle 100 at the registered parking space after (i) the start point condition becomes satisfied, and (ii) the automatic parking button 44 is not operated.

Further, when the parking assistance apparatus 10 is configured as such, the parking assistance apparatus 10 may be configured to execute a process to acquire the moving information and a process to determine whether the own vehicle position condition is satisfied with the predetermined time interval between a point of time when the tracking start point feature points are detected and a point of time when the driver completes manually parking the own vehicle 100 at the registered parking space. In this case, the parking assistance apparatus 10 is configured to (i) stop displaying the automatic parking use proposal image by the displaying device 61, (ii) stop outputting the automatic parking use proposal announcement from the sound device 62, and (iii) stop displaying the automatic parking button 44 by the displaying device 61.

Thus, in this case, when the automatic parking button 44 is operated, the own vehicle position condition is satisfied. Therefore, the parking assistance apparatus 10 starts to execute the automatic parking control when the automatic parking button 44 is operated.

When automatically parking the 100 at the registered parking space, is completed as shown in FIG. 5C, the parking assistance apparatus 10 terminates executing the automatic parking control.

Thereby, the driver can automatically park the own vehicle 100 at the registered parking space by using the automatic control when the driver desires to automatically park the own vehicle 100 at the registered parking space by using the automatic parking control after the own vehicle 100 stops in the start point area Astart, but the driver starts to manually park the own vehicle 100 at the registered parking space.

It should be noted that the parking assistance apparatus 10 may be configured to memorize various information such as the start point information, the route information, the end point information, and the moving information in the single memorization device or the single non-volatile memory. Alternatively, the parking assistance apparatus 10 may be configured to memorize various information such as the start point information, the moving route information, the end point information, the tracking start point information, and the moving information in the corresponding memorization devices or the corresponding non-volatile memories.

Further, in the example described above, the parking assistance apparatus 10 includes the single ECU 90 and is configured to execute various controls and various processes by the single ECU 90. In this regard, the parking assistance apparatus 10 may be configured to include a plurality of the ECUs and execute various controls and various processes by the ECUs.

### <Specific Operations of Parking Assistance Apparatus>

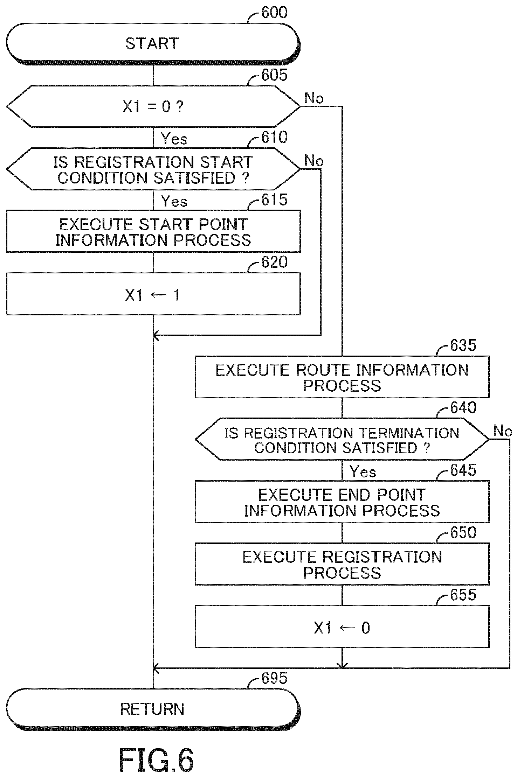

Next, specific operations of the parking assistance apparatus 10 will be described. The CPU of the ECU 90 of the parking assistance apparatus 10 is configured or programmed to execute a routine shown in FIG. 6 with the predetermined time interval. Thus, at a predetermined timing, the CPU starts a process from a step 600 of the routine shown in FIG. 6 and proceeds with the process to a step 605 to determine whether a value of an information registration control executing flag X1 is "0." The value of the information registration control executing flag X1 is set to "1" when the information registration control is executed. On the other hand, when the information registration control is not executed, the value of the information registration control executing flag X1 is set to "0."

When the CPU determines "Yes" at the step 605, the CPU proceeds with the process to a step 610 to determine whether the registration start condition is satisfied. When the CPU determines "Yes" at the step 610, the CPU proceeds with the process to a step 615 to execute the start point information process of the information registration control. Next, the CPU proceeds with the process to a step 620 to set the value of the information registration control executing flag X1 to "1." Then, the CPU proceeds with the process to a step 695 to terminate executing this routine once.

On the other hand, when the CPU determines "No" at the step 610, the CPU proceeds with the process directly to the step 695 to terminate executing this routine once.

Further, when the CPU determines "No" at the step 605, the CPU proceeds with the process to a step 635 to execute the route information process of the information registration control. Then, the CPU proceeds with the process to a step 640 to determine whether the registration termination condition is satisfied. When the CPU determines "Yes" at the step 640, the CPU proceeds with the process to a step 645 to execute the end point information process of the information registration control. Then, the CPU proceeds with the process to a step 650 to execute the registration process of the information registration control. Then, the CPU proceeds with the process to a step 655 to set the value of the information registration control executing flag X1 to "0." Then, the CPU proceeds with the process to the step 695 to terminate executing this routine once.

On the other hand, when the CPU determines "No" at the step 640, the CPU proceeds with the process directly to the step 695 to terminate executing this routine once.

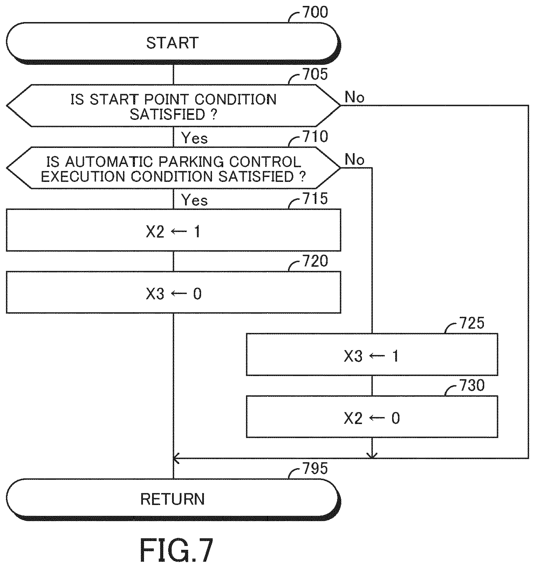

Further, the CPU is configured or programmed to execute a routine shown in FIG. 7 with the predetermined time interval. Thus, at a predetermined timing, the CPU starts a process from a step 700 of the routine shown in FIG. 7 and proceeds with the process to a step 705 to determine whether the start point condition is satisfied.

When the CPU determines "Yes" at the step 705, the CPU proceeds with the process to a step 710 to determine whether the automatic parking request condition is satisfied. When the CPU determines "Yes" at the step 710, the CPU proceeds with the process to a step 715 to set a value of an automatic parking control executing flag X2 to "1." Then, the CPU proceeds with the process to a step 720 to set or reset a value of a tracking control executing flag X3 to "0." The value of the automatic parking control executing flag X2 is set to "1" when the automatic parking control is executed. On the other hand, when the automatic parking control is not executed, the value of the automatic parking control executing flag X2 is set to "0." Further, the value of the tracking control executing flag X3 is set to "1" when the tracking control is executed. On the other hand, when the tracking control is not executed, the value of the tracking control executing flag X3 is set to "0." Then, the CPU proceeds with the process to a step 795 to terminate executing this routine once.

On the other hand, when the CPU determines "No" at the step 710, the CPU proceeds with the process to a step 725 to set the value of the tracking control executing flag X3 to "1." Then, the CPU proceeds with the process to a step 730 to set the value of the automatic parking control executing flag X2 to "0." Then, the CPU proceeds with the process to the step 795 to terminate executing this routine once.

Further, when the CPU determines "No" at the step 705, the CPU proceeds with the process directly to the step 795 to terminate executing this routine once.

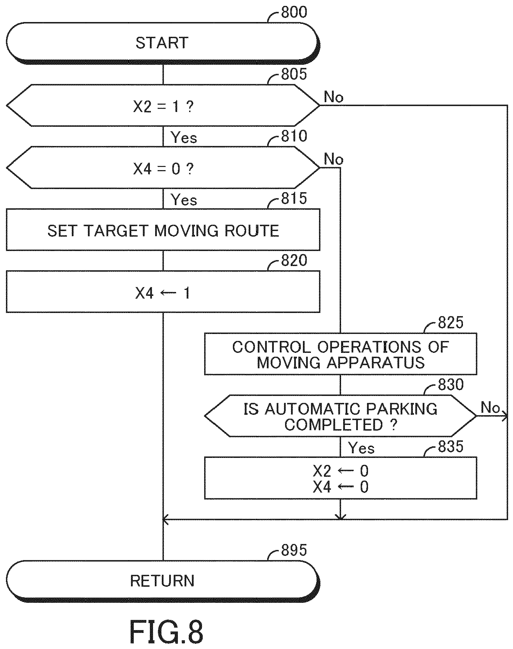

Further, the CPU is configured or programmed to execute a routine shown in FIG. 8 with the predetermined time interval. Thus, at a predetermined timing, the CPU starts a process from a step 800 of the routine shown in FIG. 8 and proceeds with the process to a step 805 to determine whether the value of the automatic parking control executing flag X2 is "1."

When the CPU determines "Yes" at the step 805, the CPU proceeds with the process to a step 810 to determine whether a value of a target moving route set flag X4 is "0." When the CPU determines "Yes" at the step 810, the CPU proceeds with the process to a step 815 to start to execute the automatic parking control and set the target moving route Rtgt. Then, the CPU proceeds with the process to a step 820 to set the value of the target moving route set flag X4 to "1." The value of the target moving route set flag X4 is set to "1" when the target moving route Rtgt is already set. On the other hand, when the target moving route Rtgt is not set, the value of the target moving route set flag X4 is set to "0."

Then, the CPU proceeds with the process to a step 895 to terminate executing this routine once.

On the other hand, when the CPU determines "No" at the step 810, the CPU proceeds with the process to a step 825 to control the operations of the moving apparatus 20 to move the own vehicle 100 along the target moving route Rtgt. Then, the CPU proceeds with the process to a step 830 to determine whether automatically parking the own vehicle 100 at the registered parking space is completed. When the CPU determines "Yes" at the step 830, the CPU proceeds with the process to a step 835 to set the values of the automatic parking control executing flag X2 and the target moving route set flag X4 to "0", respectively and terminate executing the automatic parking control. Then, the CPU proceeds with the process to the step 895 to terminate executing this routine once.

On the other hand, when the CPU determines "No" at the step 830, the CPU proceeds with the process directly to the step 895 to terminate executing this routine once.

Further, when the CPU determines "No" at the step 805, the CPU proceeds with the process directly to the step 895 to terminate executing this routine once.

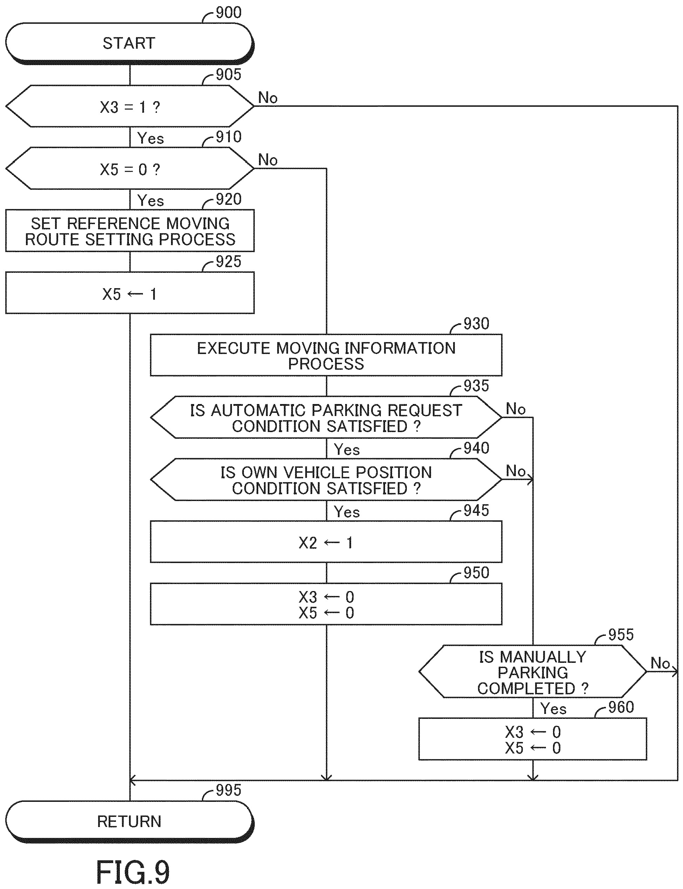

Further, the CPU is configured or programmed to execute a routine shown in FIG. 9 with the predetermined time interval. Thus, at a predetermined timing, the CPU starts a process from a step 900 of the routine shown in FIG. 9 and proceeds with the process to a step 905 to determine whether the value of the tracking control executing flag X3 is "1."

When the CPU determines "Yes" at the step 905, the CPU proceeds with the process to a step 910 to determine whether a value of a reference moving route set flag X5 is "0." The value of the reference moving route set flag X5 is set to "1" when the reference moving route Rref is already set. On the other hand, when the reference moving route Rref is not set, the value of the reference moving route set flag X5 is set to "0."

When the CPU determines "Yes" at the step 910, the CPU proceeds with the process to a step 920 to execute the reference moving route setting process of the tracking control to set the reference moving route Rref. Then, the CPU proceeds with the process to a step 925 to set the value of the reference moving route set flag X5 to "1." Then, the CPU proceeds with the process to a step 995 to terminate executing this routine once.

On the other hand, when the CPU determines "No" at the step 910, the CPU proceeds with the process to a step 930 to execute the moving information process of the tracking control. Then, the CPU proceeds with the process to a step 935 to determine whether the automatic parking request condition is satisfied. When the CPU determines "Yes" at the step 935, the CPU proceeds with the process to a step 940 to determine whether the own vehicle position condition is satisfied. When the CPU determines "Yes" at the step 940, the CPU proceeds with the process to a step 945 to set the value of the automatic parking control executing flag X2 to "1." Then, the CPU proceeds with the process to a step 950 to set the values of the tracking control executing flag X3 and the reference moving route set flag X5 to "0", respectively. Then, the CPU proceeds with the process to the step 995 to terminate executing this routine once.

On the other hand, when the CPU determines "No" at the step 935 or 940, the CPU proceeds with the process to the step 955 to determine whether the driver completes manually parking the own vehicle 100 at the registered parking space. When the CPU determines "Yes" at the step 955, the CPU proceeds with the process to a step 960 to set the values of the tracking control executing flag X3 and the reference moving route set flag X5 to "0", respectively. Then, the CPU proceeds with the process to the step 995 to terminate executing this routine once.

On the other hand, when the CPU determines "No" at the step 955, the CPU proceeds with the process directly to the step 995 to terminate executing this routine once.

Further, when the CPU determines "No" at the step 905, the CPU proceeds with the process directly to the step 995 to terminate executing this routine once.

The specific operations of the parking assistance apparatus 10 have been described.

### <First Modified Example>

Next, the parking assistance apparatus 10 according to a first modified example of the embodiment of the invention will be described. The parking assistance apparatus 10 of the embodiment described above stores all the moving information acquired after the tracking start point feature points are detected, and uses all the stored moving information in order to determine whether the own vehicle position condition is satisfied. Thus, calculation load of the CPU of the parking assistance apparatus 10 is great. Accordingly, the parking assistance apparatus 10 may be configured as described below.

### information Registration Control>

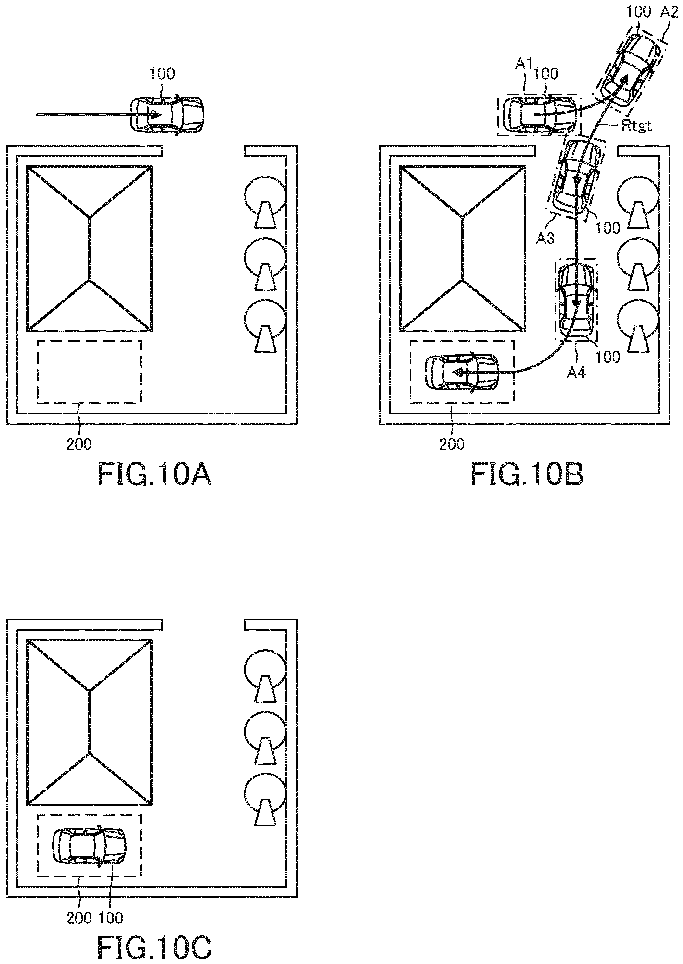

The parking assistance apparatus 10 according to the first modified example starts to execute the information registration control when (i) the own vehicle 100 stops near the parking space 200 as shown in FIG. 10A, and (ii) the registration start condition becomes satisfied. When the parking assistance apparatus 10 starts to execute the information registration control, the parking assistance apparatus 10 starts to execute the start point information process of the information registration control. The start point information process is a process to (i) detect the start point feature points from the camera images, (ii) store the detected start point feature points as the start point information, (iii) acquire the start point positional relationship between the detected start point feature points and the own vehicle 100, and (iv) store the acquired start point positional relationship as the start point information, associated with the detected start point feature points.

After the parking assistance apparatus 10 completes the start point information process of the information registration control, the parking assistance apparatus 10 executes an initial route information process of the information registration control with the predetermined time interval. The initial route information process is the same as the route information process of the information registration control according to the embodiment described above. That is, the initial route information process is a process to acquire the moving route R of the own vehicle 100 and store the acquired moving route R as the initial route information, associated with the detected start point feature points.

In addition, after the parking assistance apparatus 10 according to the first modified example completes the start point information process of the information registration control, the parking assistance apparatus 10 executes a middle point information process of the information registration control each time the own vehicle 100 moves a predetermined distance. The middle point information process is a process to (i) detect the feature points of the ground and the objects around the parking space 200 as middle point feature points, (ii) store the detected middle point feature points as middle point information, (iii) acquire a positional relationship between the detected middle point feature points and the own vehicle 100, and (iv) the acquired positional relationship as the middle point information, associated with the detected middle point feature points.

For example, in case that the driver manually parks the own vehicle 100 at the parking space 200, the start point information process of the information registration control is executed when the own vehicle 100 stops in an area A1. Thereafter, when the own vehicle 100 moves the predetermine distance and reaches an area A2, the middle point information process of the information registration control is executed. Thereafter, when the own vehicle 100 moves the predetermine distance and reaches an area A3, the middle point information process of the information registration control is executed. Thereafter, when the own vehicle 100 moves the predetermine distance and reaches an area A4, the middle point information process of the information registration control is executed.

In addition, after the parking assistance apparatus 10 completes each of the middle point information processes of the information registration control, the parking assistance apparatus 10 executes a middle route information process of the information registration control with the predetermined time interval. The middle route information process is a process to store the moving routes R of the own vehicle 100 acquired after the parking assistance apparatus 10 completes each of the middle point information processes as the middle point route information, associated with the detected middle point feature points. In particular, the middle route information process is a process to (i) acquire the steering amounts of the own vehicle 100 after the parking assistance apparatus 10 completes each of the middle point information processes, (ii) acquire the moving distances of the own vehicle 100 (i.e., the distances which the own vehicle 100 moves) with the acquired steering amounts, respectively, and (iii) store the acquired steering amounts and the acquired moving distances as the middle point route information, associated with the middle point feature points.

Then, the parking assistance apparatus 10 executes the middle point information process of the information registration control each time the own vehicle 100 moves the predetermined distance and executes the middle route information process of the information registration control with the predetermined time interval until the driver completes manually parking the own vehicle 100 at the parking space 200.

When (i) the driver completes manually parking the own vehicle 100 at the parking space 200 as shown in FIG. 10C, and (ii) the registration termination condition becomes satisfied in response to the registration fixing button 43 being operated, the parking assistance apparatus 10 executes the end point information process of the information registration control and thereafter, executes the registration process of the information registration control.

The end point information process according to the first modified example is the same as the end point information process of the information registration control according to the embodiment described above. Further, the registration process according to the first modified example is a process to (i) register the parking space 200 where the own vehicle 100 is parked this time by the driving operation carried out by the driver as the registered parking space and (ii) register or memorize the stored start point information, the stored initial route information, the stored middle point information, the stored middle point route information, and the stored end point information as the fixed information, associated with the registered parking space.

After the parking assistance apparatus 10 completes the registration process, the parking assistance apparatus 10 terminates executing the information registration control.

In the description below, registered middle point information is the middle point information registered, associated with the registered parking space, registered middle point feature points are the middle point feature points memorized as the registered middle point information, **and** a registered middle point positional relationship is the middle point positional relationship memorized as the registered middle point information.

### <Tracking Control>

Thereafter, when the start point condition becomes satisfied, but the automatic parking request condition does not become satisfied, the parking assistance apparatus 10 starts to execute the tracking control. When the parking assistance apparatus 10 starts to execute the tracking control, the parking assistance apparatus 10 executes the reference moving route setting process of the tracking control. The initial reference moving route setting process executed at this moment, is the same as the reference moving route setting process of the tracking control of the embodiment described above.

Thereafter, the parking assistance apparatus 10 executes an initial moving information process of the tracking control with the predetermined time interval as far as the automatic parking button 44 is not operated until the parking assistance apparatus 10 detects target middle point feature points (i.e., the feature points corresponding to the registered middle point features).

The initial moving information process is the same as the moving information process of the tracking control of the embodiment described above. That is, the initial moving information process is a process to (i) acquire the steering amount of the own vehicle 100 and the moving distance of the own vehicle 100 (i.e., the distances which the own vehicle 100 moves) with the acquired steering amount as initial moving information or first information and (ii) store the acquired steering amount and the acquired moving distance, associated with the tracking start point feature points.

Thereafter, when the parking assistance apparatus 10 detects the target middle point feature points, the parking assistance apparatus 10 executes a middle reference moving route setting process of the tracking control. The middle reference moving route setting process is a process to (i) acquire a relationship between the detected target middle point feature points and the own vehicle 100 as a target middle point positional relationship, (ii) compare the acquired target middle point positional relationship and the registered middle point positional relationship, and (iii) set a middle reference moving route Rref, based on the comparing result and the registered middle moving route.

The middle reference moving route Rref is the same as the target moving route Rtgt which is set when (i) a middle point condition becomes satisfied in response to the target middle point feature points being detected, and (ii) the automatic parking control starts to be executed in response to the automatic parking request condition becoming satisfied. The middle reference moving route Rref is represented by the change of the steering amount of the own vehicle 100 with respect to the moving distance of the own vehicle 100.

Thereafter, the parking assistance apparatus 10 executes a middle moving information process of the tracking control with the predetermined time interval as far as the automatic parking button 44 is not operated until the parking assistance apparatus 10 detects the target middle point feature points (i.e., the feature points corresponding to the next registered middle point feature points).

The middle moving information process is the same as the moving information of the tracking control of the embodiment described above. That is, the middle moving information process is a process to (i) acquire the steering amount of the own vehicle 100 and the moving distance of the own vehicle 100 (i.e., the distance which the own vehicle 100 moves) with the acquired steering amount as the middle moving information or second information and (ii) store the acquired steering amount and the acquired moving distance, associated with the detected target middle point feature points.

Thereafter, the parking assistance apparatus 10 executes the middle reference moving route setting process and the middle moving information process each time the parking assistance apparatus 10 detects the feature points corresponding to the registered middle point feature points.

### <Automatic Parking Control>

When the automatic parking request condition becomes satisfied in response to the automatic parking button 44 being operated before the driver completes manually parking the own vehicle 100 at the registered parking space, the parking assistance apparatus 10 determines whether the own vehicle position condition is satisfied. In the first modified example, the own vehicle position condition is a condition that the own vehicle 100 is in a predetermined distance area from the initial reference moving route Rref or the middle reference moving route Rref. In this example, the initial moving information (i.e., the change of the steering amount of the own vehicle 100 with respect to the moving distance of the own vehicle 100) stored by the initial moving information process of the tracking control is used to determine whether the own vehicle position condition is satisfied between a point of time when the initial moving information process of the tracking control starts to be executed and a point of time when the first middle moving information process of the tracking control starts to be executed. Then, the middle moving information (i.e., the change of the steering amount of the own vehicle 100 with respect to the moving distance of the own vehicle 100) stored by the last middle moving information process of the tracking control is used to determine whether the own vehicle position condition is satisfied between a point of time when the last middle moving information process of the tracking control starts to be executed and a point of time when the next middle moving information process of the tracking control starts to be executed.

When the own vehicle 100 is not in the predetermined distance area from the initial reference moving route Rref or the middle reference moving route Rref, the parking assistance apparatus 10 does not execute the automatic parking control. On the other hand, when the own vehicle 100 is in the predetermined distance area from the initial reference moving route Rref or the middle reference moving route Rref, the parking assistance apparatus 10 starts to execute the automatic parking control.

Thereby, the parking assistance apparatus 10 can reduce information to be stored (i.e., the steering amounts of the own vehicle 100 and the moving distances of the own vehicle 100) while the driver manually parks the own vehicle 100 at the registered parking space in order to determine whether the own vehicle 100 is in the predetermined distance area from the reference moving route Rref. As a result, the parking assistance apparatus 10 can reduce information used to determine whether the own vehicle 100 is in the predetermined distance area from the reference moving route Rref. Thus, the calculation load of the CPU can be reduced.

### <Specific Operations of Parking Assistance Apparatus of First Modified Example>

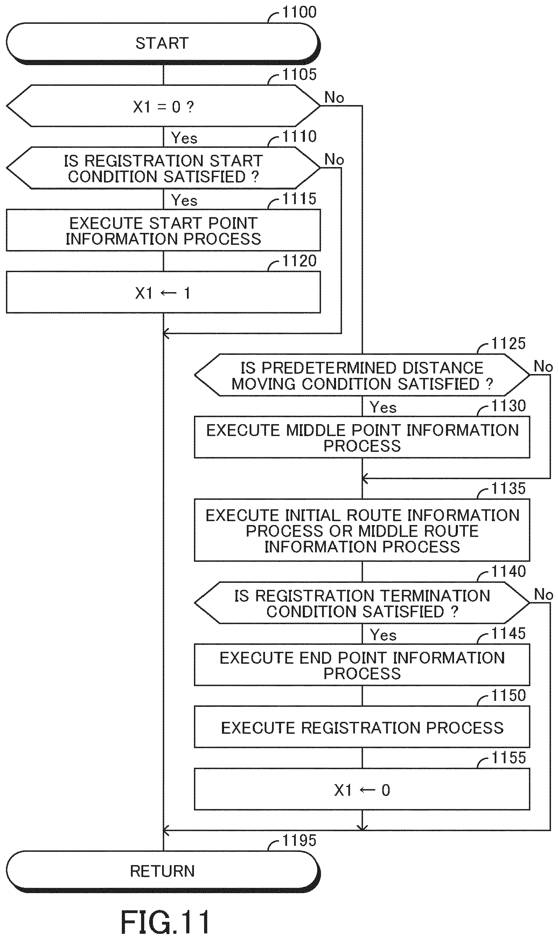

Next, the specific operations of the parking assistance apparatus 10 according to the first modified example will be described. The CPU of the ECU 90 of the parking assistance apparatus 10 according to the first modified example is configured or programed to execute a routine shown in FIG. 11 in place of the routine shown in FIG. 6. Thus, at a predetermined timing, the CPU starts a process from a step 1100 of the routine shown in FIG. 11 and proceeds with the process to a step 1105 to determine whether the value of the information registration control executing flag X1 is "0."

When the CPU determines "Yes" at the step 1105, the CPU proceeds with the process to a step 1110 to determine whether the registration start condition is satisfied. When the CPU determines "Yes" at the step 1110, the CPU proceeds with the process to a step 1115 to execute the start point information process of the information registration control. Then, the CPU proceeds with the process to a step 1120 to set the value of the information registration control executing flag X1 to "1." Then, the CPU proceeds with the process to a step 1195 to terminate executing this routine once.

On the other hand, when the CPU determines "No" at the step 1110, the CPU proceeds with the process directly to the step 1195 to terminate executing this routine once.

When the CPU determines "No" at the step 1105, the CPU proceeds with the process to a step 1125 to determine whether a predetermined distance moving condition is satisfied. The predetermined distance moving condition becomes satisfied each time the own vehicle 100 moves the predetermined distance.

When the CPU determines "Yes" at the step 1125, the CPU proceeds with the process to a step 1130 to execute the middle point information process of the information registration control. Then, the CPU proceeds with the process to a step 1135.

On the other hand, when the CPU determines "No" at the step 1125, the CPU proceeds with the process to a step 1135.

When the CPU proceeds with the process to the step 1135, the CPU executes the initial route information process of the information registration control when the CPU has not executed a process to acquire the middle point feature points. On the other hand, when the CPU has executed the process to acquire the middle point feature points at least once, the CPU execute the middle route information process of the information registration control. Then, the CPU proceeds with the process to a step 1140 to determine whether the registration termination condition is satisfied. When the CPU determines "Yes" at the step 1140, the CPU proceeds with the process to a step 1145 to execute the end point information process of the information registration control. Then, the CPU proceeds with the process to a step 1150 to execute the registration process of the information registration control. Then, the CPU proceeds with the process to a step 1155 to set the value of the information registration control executing flag X1 to "0." Then, the CPU proceeds with the process to the step 1195 to terminate executing this routine once.

On the other hand, when the CPU determines "No" at the step 1140, the CPU proceeds with the process directly to the step 1195 to terminate executing this routine once.

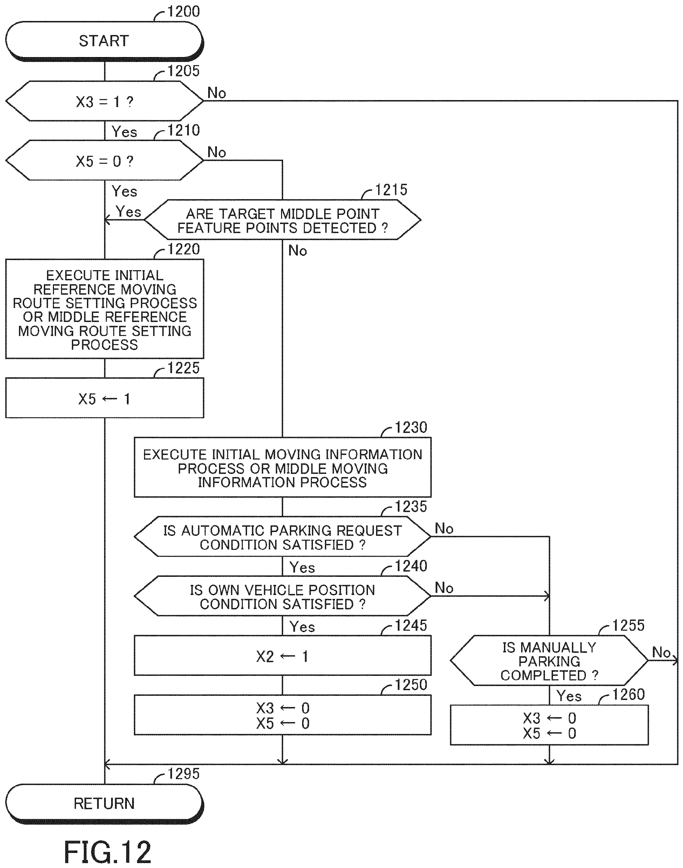

In addition, the CPU is configured or programmed to execute a routine shown in FIG. 12 with the predetermined time interval in place of the routine shown in FIG. 9. Thus, at a predetermined timing, the CPU starts a process from a step 1200 of the routine shown in FIG. 12 and proceeds with the process to a step 1205 to determine whether the value of the tracking control executing flag X3 is "1."

When the CPU determines "Yes" at the step 1205, the CPU proceeds with the process to a step 1210 to determine whether the value of the reference moving route set flag X5 is "0."

When the CPU determines "Yes" at the step 1210, the CPU proceeds with the process to a step 1220. On the other hand, when the CPU determines "No" at the step 1210, the CPU proceeds with the process to a step 1215 to determine whether the target middle point feature points are detected. When the CPU determines "Yes" at the step 1215, the CPU proceeds with the process to the step 1220.

When the CPU proceeds with the process to the step 1220, the CPU executes the initial reference moving route setting process of the tracking control to set the initial reference moving route Rref when the parking assistance apparatus 10 has not executed the process to acquire the target middle point feature points. On the other hand, when the parking assistance apparatus 10 has executed the process to acquire the target middle point feature points at least once, the CPU executes the middle reference moving route setting process of the tracking control to set the middle reference moving route Rref. Then, the CPU proceeds with the process to a step 1225 to set the value of the reference moving route set flag X5 to "1." Then, the CPU proceeds with the process to a step 1295 to terminate executing this routine once.

On the other hand, when the CPU determines "No" at the step 1215, the CPU proceeds with the process to a step 1230 to execute the initial moving information process of the tracking control when the CPU has not executed the process to acquire the target middle point feature points. On the other hand, when the CPU has executed the process to acquire the target middle point feature points at least once, the CPU executes the middle moving information process of the tracking control. Then, the CPU proceeds with the process to a step 1235 to determine whether the automatic parking request condition is satisfied. When the CPU determines "Yes" at the step 1235, the CPU proceeds with the process to a step 1240 to determine whether the own vehicle position condition is satisfied. When the CPU determines "Yes" at the step 1240, the CPU proceeds with the process to a step 1245 to set the value of the automatic parking control executing flag X2 to "1." Then, the CPU proceeds with the process to a step 1250 to set the values of the tracking control executing flag X3 and the reference moving route set flag X5 to "0", respectively. Then, the CPU proceeds with the process to the step 1295 to terminate executing this routine once.

On the other hand, when the CPU determines "No" at the step 1235 or 1240, the CPU proceeds with the process to a step 1255 to determine whether the driver completes manually parking the own vehicle 100 at the registered parking space. When the CPU determines "Yes" at the step 1255, the CPU proceeds with the process to a step 1260 to set the values of the tracking control executing flag X3 and the reference moving route set flag X5 to "0", respectively. Then, the CPU proceeds with the process to the step 1295 to terminate executing this routine once.

On the other hand, when the CPU determines "No" at the step 1255, the CPU proceeds with the process directly to the step 1295 to terminate executing this routine once.

When the CPU determines "No" at the step 1205, the CPU proceeds with the process directly to the step 1295 to terminate executing this routine once.

The specific operations of the parking assistance apparatus 10 according to the first modified example have been described.

### <Second Modified Example>

Next, the parking assistance apparatus 10 according to a second modified example of the embodiment of the invention will be described. With the parking assistance apparatus 10 according to the embodiment described above, the automatic parking control is executed when the automatic parking button 44 is operated before the driver completes manually parking the own vehicle 100 at the registered parking space. Therefore, a condition of executing the automatic parking control includes a condition that the own vehicle 100 stops near the registered parking space, that is, a condition that the own vehicle 100 stops in the start point area Astart.

Thus, when the own vehicle 100 stops outside of the start point area Astart, the start point condition does not become satisfied. In this case, even if the driver desires automatically parking the own vehicle 100 at the registered parking space by the automatic parking control, the driver cannot use the automatic parking control. However, if the driver can use the automatic parking control in such a situation, it is convenient for the driver. Accordingly, the parking assistance apparatus 10 may be configured as described below.

### information Registration Control>

Similar to the parking assistance apparatus 10 according to the first modified example, the parking assistance apparatus 10 according to the second modified example executes the information registration control to register or memorizes the start point information, the initial moving information, the middle point information, the middle moving information, and the end point information, and the parking space when the registration start condition becomes satisfied.

### <Tracking Control>

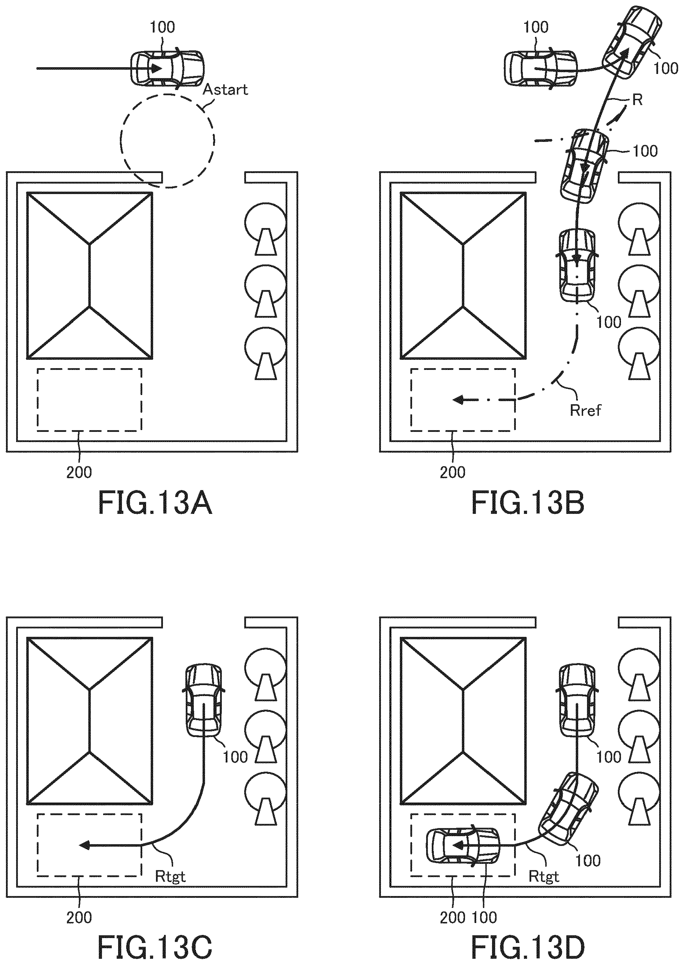

Then, in case that the own vehicle 100 stops near the registered parking space, but the own vehicle 100 is outside of the start point area Astart as shown in FIG. 13A, the start point condition is not satisfied. In this case, when the driver starts to manually park the own vehicle 100 at the registered parking space, the parking assistance apparatus 10 starts to execute the tracking control. When the parking assistance apparatus 10 starts to execute the tracking control, the parking assistance apparatus 10 executes a target middle point feature point detection process of the tracking control to detect the target middle point feature points (i.e., the feature points corresponding to the registered middle point feature points) from the camera images with the predetermined time interval while the driver manually parks the own vehicle 100 at the registered parking space as shown in FIG. 13B.

It should be noted that the camera images or the position of the own vehicle 100 determined from the GPS signal may be used to determine whether the own vehicle 100 stops near the registered parking space, but the own vehicle 100 is outside of the start point area Asta rt.

In case that the parking assistance apparatus 10 is configured to use the camera images to determine whether the own vehicle 100 stops near the registered parking space, but the own vehicle 100 is outside of the start point area Astart, the parking assistance apparatus 10 determines that the own vehicle 100 stops near the registered parking space, but the own vehicle 100 is outside of the start point area Astart when (i) target start point feature points (i.e., the feature points corresponding to the registered start point feature points from the camera images taken when the own vehicle 100 stops, are detected, and (ii) the positional relationship between the detected target start point feature points and the own vehicle 100 is different from the registered start point positional relationship to an extent.

On the other hand, in case that the parking assistance apparatus 10 is configured to use the position of the own vehicle 100 determined, based on the GPS signal to determine whether the own vehicle 100 stops near the registered parking space, but the own vehicle 100 is outside of the start point area Astart, the parking assistance apparatus 10 is configured to register the position of the own vehicle 100 determined, based on the GPS signal as a start point position, associated with the registered parking space when the parking assistance apparatus 10 starts to execute the information registration control in response to the registration start condition becoming satisfied. After the parking assistance apparatus 10 terminates executing the information registration control, the parking assistance apparatus 10 determines that the own vehicle 100 stops near the registered parking space, but the own vehicle 100 is outside of the start point area Astart when the position of the own vehicle 100 determined, based on the GPS signal when the own vehicle 100 stops this time, is away from the registered start point position by a predetermined distance, but near the registered start point position.

Then, when the target middle point feature points are detected, the parking assistance apparatus 10 executes the middle reference moving route setting process of the tracking control for the detected target middle point feature points. Then, the parking assistance apparatus 10 executes the middle moving information process of the tracking control with the predetermined time interval. Thereafter, each time the target middle point feature points are detected, the parking assistance apparatus 10 executes the middle reference moving route setting process of the tracking control for the detected target middle point feature points and then, executes the middle moving information process of the tracking control with the predetermined time interval.

### <Automatic Parking Control>

When the automatic parking request condition becomes satisfied in response to the automatic parking button 44 being operated before the driver completes manually parking the own vehicle 100 at the registered parking space, the parking assistance apparatus 10 determines whether the own vehicle 100 is in the predetermined distance area from the middle reference moving route Rref, based on the middle moving information (i.e., the change of the steering amount of the own vehicle 100 with respect to the moving distance of the own vehicle 100) stored, associated with the target middle point feature points. That is, the parking assistance apparatus 10 determines whether the own vehicle position condition is satisfied.

When the own vehicle position condition is not satisfied, the parking assistance apparatus 10 does not execute the automatic parking control. On the other hand, when the own vehicle position condition is satisfied, the parking assistance apparatus 10 starts to execute the automatic parking control to set the target moving route Rtgt as shown in FIG. 13C and move the own vehicle 100 along the target moving route Rtgt as shown in FIG. 13D.

Thereby, even when the own vehicle 100 stops near the registered parking space, but outside of the start point area Astart, and thus the start point condition does not become satisfied, if the target middle point feature points are detected, the driver can automatically park the own vehicle 100 at the registered parking space by using the automatic parking control as far as the own vehicle 100 is in the predetermined position area from the middle reference moving route Rref.

It should be noted that the parking assistance apparatus 10 according to the second modified example may be configured to display the automatic parking proposal image by the displaying device 61 and/or output the automatic parking proposal announcement from the sound device 62 when the target moving route Rtgt can be set since the target middle point feature points are detected.

### <Specific Operations of Parking Assistance Apparatus of Second Modified Example>

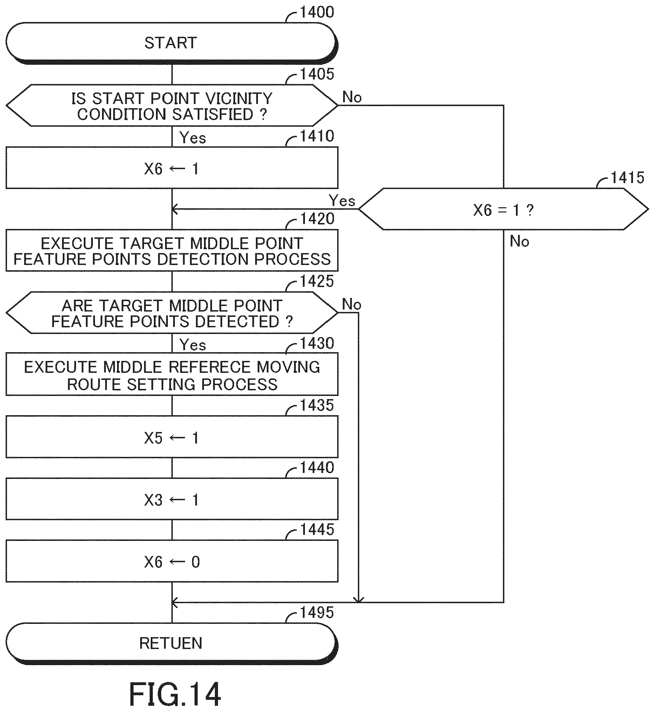

Next, specific operations of the parking assistance apparatus 10 according to the second modified example will be described. The CPU of the ECU 90 of the parking assistance apparatus 10 according to the second modified example is configured or programmed to execute a routine shown in FIG. 14 with the predetermined time interval in place of the routines shown in FIG. 7, FIG. 8, FIG. 11, and FIG. 12. Thus, at a predetermined timing, the CPU starts a process from a step 1400 of the routine shown in FIG. 14 and proceeds with the process to a step 1405 to determine whether a start point vicinity condition is satisfied. The start point vicinity condition is satisfied when (i) the own vehicle 100 stops near the registered parking space, but is outside of the start point area Astart and thus, the start point condition does not become satisfied, and the driver starts to manually park the own vehicle 100 at the registered parking space.

When the CPU determines "Yes" at the step 1405, the CPU sets a value of a detection process executing flag X6 to "1." The value of the detection process executing flag X6 is set to "1" when the target middle point feature point detection process is executed. On the other hand, when the target middle point feature point detection process is not executed, the value of the detection process executing flag X6 is set to "0."

Then, the CPU proceeds with the process to a step 1420.

On the other hand, when the CPU determines "No" at the step 1405, the CPU proceeds with the process to a step 1415 to determine whether the value of the detection process executing flag X6 is "1." When the CPU determines "Yes" at the step 1415, the CPU proceeds with the process to the step 1420.

When the CPU proceeds with the process to the step 1420, the CPU executes the target middle point feature point detection process of the tracking control. Then, the CPU proceeds with the process to a step 1425 to determine whether the target middle point feature points are detected. When the CPU determines "Yes" at the step 1425, the CPU proceeds with the process to a step 1430 to execute the middle reference moving route setting process of the tracking control. Then, the CPU proceeds with the process to a step 1435 to set the value of the reference moving route set flag X5 to "1." Then, the CPU proceeds with the process to a step 1440 to set the value of the tracking control executing flag X3 to "1." Then, the CPU proceeds with the process to a step 1445 to set or reset the value of the detection process executing flag X6 to "0." Then, the CPU proceeds with the process to a step 1495 to terminate executing this routine once.

On the other hand, when the CPU determines "No" at the step 1425, the CPU proceeds with the process directly to the step 1495 to terminate executing this routine once.

When the CPU determines "No" at the step 1415, the CPU proceeds with the process directly to the step 1495 to terminate executing this routine once.

The specific operations of the parking assistance apparatus 10 according to the second modified example have been described.

It should be noted that the invention is not limited to the aforementioned embodiments, and various modifications can be employed within the scope of the invention.

## Claims

1. A parking assistance apparatus (10) comprising an electronic control unit (90),
wherein the electronic control unit (90) is configured to execute an information memorization control to:
detect at least one feature point as a start feature point from a taken image and memorize the detected start feature point as a registered start feature point when an own vehicle (100) stops near a parking space (200); and
memorize as route information, information on a moving route (R) of the own vehicle (100) between a point of time when the start feature point is detected and a point of time when a driver of the own vehicle (100) completes manually parking the own vehicle (100) at the parking space (200),
manually parking the own vehicle (100) corresponding to parking the own vehicle (100) by a driving operation carried out by the driver,
wherein when (i) the feature point corresponding to the registered start feature point is detected, and (ii) automatically parking the own vehicle (100) at the parking space (200) is requested, the electronic control unit (90) is configured to execute an automatic parking control to:
set a target moving route (Rtgt), based on the route information;
move the own vehicle (100) along the target moving route (Rtgt); and
park the own vehicle (100) at the parking space (200),
wherein when (i) the feature point corresponding to the registered start feature point is detected, (ii) automatically parking the own vehicle (100) at the parking space (200) is not requested, and (iii) the driver starts manually parking the own vehicle (100) at the parking space (200), the electronic control unit (90) is configured to set a reference moving route (Rref), based on the route information, and
wherein after the driver starts manually parking the own vehicle (100) at the parking space (200), the electronic control unit (90) is configured to execute the automatic parking control when (i) automatically parking the own vehicle (100) at the parking space (200) is requested, and (ii) a positional relationship between the own vehicle (100) and the reference moving route (Rref) satisfies a predetermined condition.

2. The parking assistance apparatus (10) as set forth in claim 1, wherein the predetermined condition is a condition that the own vehicle (100) exists at a position within a predetermined distance range from the reference moving route (Rref).

3. The parking assistance apparatus (10) as set forth in any one of claims 1 and 2, wherein the route information includes a change of a steering amount of the own vehicle (100) associated with a moving distance of the own vehicle (100) between the point of time when the start feature point is detected and the point of time when the driver completes manually parking the own vehicle (100) at the parking space (200).

4. The parking assistance apparatus (10) as set forth in any one of claims 1 and 2, wherein the electronic control unit (90) is configured to:
while the electronic control unit (90) executes the information memorization control,
detect at least one feature point as a middle point feature point from the taken image between the point of time when the start feature point is detected and the point of time when the driver completes manually parking the own vehicle (100) at the parking space (200);
memorize the detected at least one middle point feature point as a registered middle point feature point;
memorize as the route information, first information representing the moving route (R) of the own vehicle (100) between the point of time when the start feature point is detected and a point of time when the middle point feature point memorized as the registered middle point feature point is detected;
memorizes as the route information, second information representing the moving route (R) of the own vehicle (100) after the middle point feature point memorized as the registered middle point feature point is detected;
set the reference moving route (Rref), based on the first information when the feature point corresponding to the registered start feature point is detected; and
set the reference moving route (Rref), based on the second information when the feature point corresponding to the registered middle point feature point is detected.
